# EUROPEAN PATENT APPLICATION

(11) **EP 1 764 456 A2**
(43) Date of publication of application: **21.03.2007**
(21) Application number: 06018539.4
(22) Date of filing: 05.09.2006
(51) Int. Cl.: E04F 13/14, E04F 13/08

(54) **Anchoring system for cladding panels, particularly for ventilated facades**

(30) Priority: 14.09.2005 IT MI20051691
(71) Applicant: Dallera, Franco, 28887 Omegna (VB) (IT)
(72) Inventor: Dallera, Franco, 28887 Omegna (VB) (IT)
(74) Representative: Petruzziello, Aldo

(57) **Abstract**

An anchoring system (1) for panels (2) for cladding of walls (6) and particularly for ventilated facades is described, comprising an anchoring arm (5) adapted to be anchored in special seats (90, 91) formed in profiles (9) made integral with the wall (6) to be clad, two opposed leaf springs (3) adapted to engage in respective grooves (20) formed in the rear surface of the panel (2), and screw type fixing means (4) adapted to constrain the leaf springs (3) to the anchoring arm (5).

## Description

The present invention refers to a system for anchoring panels, such as mineral slabs of ceramic, semi-precious stone, marble, granite and the like, for cladding of walls and particularly for ventilated facades.

Ventilated facades are currently widely used in building. What is meant by ventilated façade is cladding of a vertical wall, of masonry or other material, generally achieved with lightweight panels mounted at a certain distance from said wall, so as to create an air space between the wall and the cladding.

Ventilated walls are generally mounted by means of a reticular framework which comprises upright profiles which are anchored by means of brackets to the masonry wall in a vertical arrangement, and stringer profiles which are fixed to the uprights in a horizontal arrangement. The stringer profiles have seats adapted to accommodate the outer edges of anchoring arms destined to be made integral with the cladding panels.

According to the prior art, systems for fixing the panel to the anchoring arm require the formation of blind cylindrical or undercut holes in the rear surface of the panel. A cylindrical insert which, when engaged by a screw, expands like a plug or mandrel, so as to exert a grip on the side walls which define the hole in the slab, is inserted into said holes in the panels.

For fixing of the anchoring arm to the panel, a screw is then inserted through a hole or slot in the anchoring arm and is screwed into the insert which expands in the cylindrical hole in the panel.

It must be considered that to comply with market demands, cladding panels have a very reduced thickness, about 8-15 mm, and are made of very hard, breakable quarry material. Therefore, the operation of making a hole in said panel is very delicate since breakage of the panel often occurs and requires high precision otherwise the hole obtained will not be suitable for the expansion insert, making the panel unserviceable. As a result, said operation of making a hole in the panel implies a high wastage rate in the preparation of the panels.

Object of the present invention is to overcome the drawbacks of the prior art by providing an anchoring system for panels, particularly for ventilated walls, that is simple and quick for the installer and at the same time able to minimize the production of waste.

Another object of the present invention is to provide such a system for anchoring panels that is versatile and suitable to be applied to various types of panels for cladding of ventilated facades.

These objects are achieved in accordance with the invention with the characteristics listed in appended independent claim 1.

Advantageous embodiments of the invention are apparent from the dependent claims. The anchoring system for panels for cladding of walls and particularly for ventilated facades, according to the invention, comprises:
- an anchoring arm adapted to be anchored in appropriate seats formed in profiles made integral with the wall to be clad;
- at least one leaf spring adapted to engage in a respective groove formed in the rear surface of the panel, and
- fixing means adapted to constrain said at least one leaf spring to said anchoring arm.

The advantages of the system according to the invention are evident in that it uses grooves in the rear surface of the panels. In fact said grooves can be made easily by milling, without any risk of breaking or damaging the panel.

Furthermore the grooves do not require any precision in production, since any errors in tolerance are compensated for by the elasticity of the leaf springs which engage therein.

Further characteristics of the invention will be made clearer by the detailed description that follows, referring to a purely exemplary and therefore non limiting embodiment thereof, illustrated in the appended drawings, in which:
Figure 1 is a perspective exploded view, illustrating the anchoring system for panels according to the invention;
Figure 2 is a cross sectional view illustrating the panel anchoring system of Figure 1 exploded, in which the two springs have been brought together;
Figure 3 is a longitudinal sectional view of the panel anchoring system of Figure 1 assembled;
Figure 4 is a sectional view, taken along a vertical plane of section, illustrating the operation of assembly of a slab according to the invention in a ventilated façade; and
Figure 5 is a sectional view, along a horizontal plane, illustrating the ventilated façade of Figure 4.

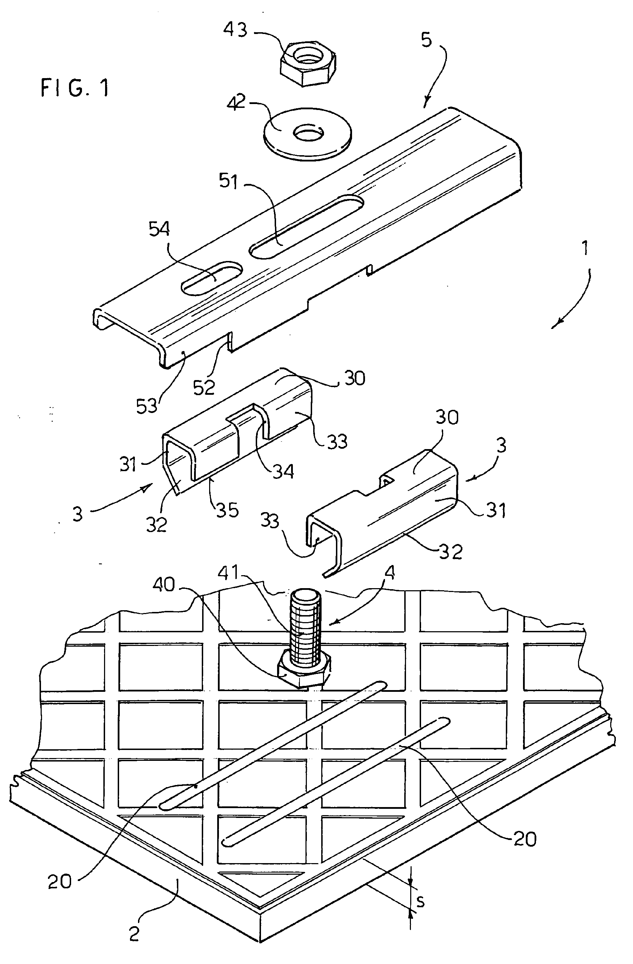

With the aid for now of Figures 1-3, an anchoring system for panels according to the invention, indicated as a whole with reference numeral 1, is described.

The anchoring system 1 is used for panels or slabs 2 of hard material, such as ceramic, marble, granite or other mineral materials used for cladding of walls. The panel 2 has a thickness S generally comprised between 8 and 15 mm, preferably 10 mm.

Two grooves 20 are made by milling in the rear surface of the panel 2, namely the opposite surface to that destined to placed on view.

As shown in Figure 1, the grooves 20 extend in a straight line longitudinally along the panel and are parallel and spaced apart from each other.

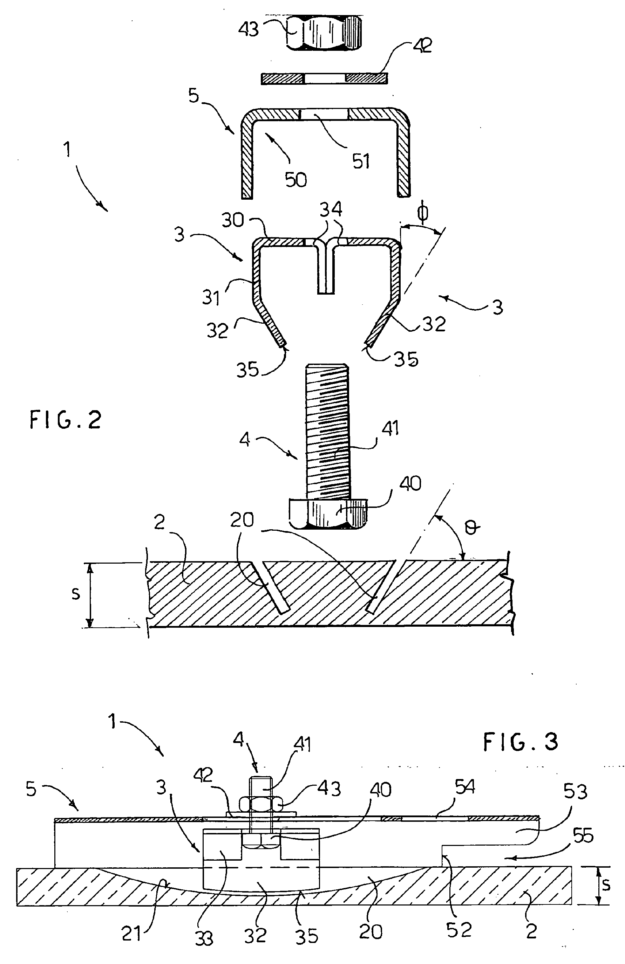

As shown in Figure 2, according to a cross section of the panel 2, the grooves 20 extend obliquely and converge towards the surface of the panel on view, for a depth of about 9/10 of the thickness S of the panel. The axis of the grooves 20 is inclined with respect to the surface of the panel 2 by an angle θ which can be between 40° and 70°, preferably 55°.

As shown in Figure 3, each groove 20 has a substantially arched profile 21 which reaches its maximum depth in the central portion of the groove.

Returning to Figure 1, the anchoring system 1 comprises two leaf springs 3 adapted to engage in the respective grooves 20. Each leaf spring 3 is obtained from a metal plate which comprises a substantially U-shaped portion 30 in cross section.

One side 31 of the U-shaped portion 30 continues with an anchoring portion 32 inclined with respect to the side 31 of the U-shaped portion by an angle φ shown in Figure 2, in which φ = 90° - θ. The other side 33 of the U-shaped portion 30 has a rectangular cut-out 34, disposed in a central position.

The bottom profile 35 of the anchoring portion 32 is slightly curved so as to adapt to the curve of the profile 21 (Figure 3) of the groove 20.

When the anchoring portions 32 of the springs 3 are inserted into the respective grooves 20 of the panel, the two sides 33 of the U-shaped portions 30 of the springs abut against each other and the cut-outs 34 are disposed opposite each other, so as to give rise to a through hole, as shown in Figure 2.

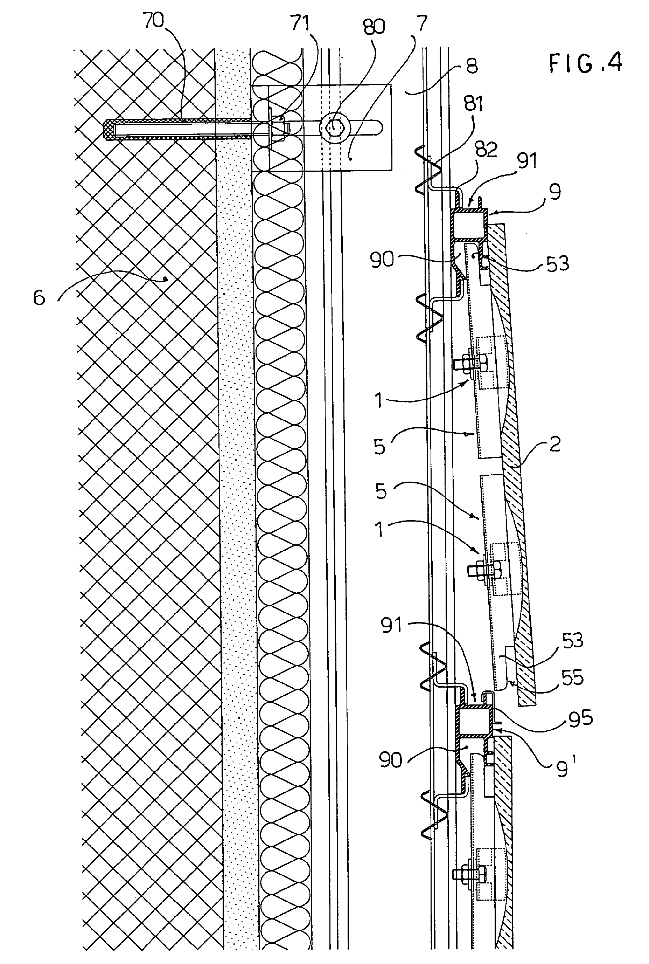

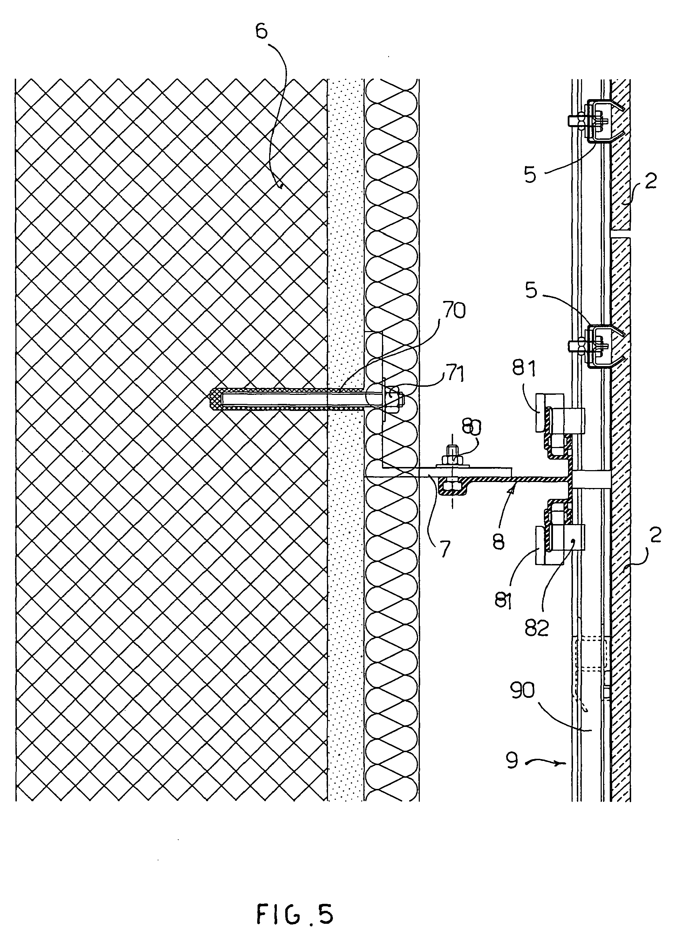

Before applying the springs 3 in the grooves 20, a screw or nut 4 is disposed with the head 40 on the rear surface of the panel 2, between the two grooves 20. Thus, after application of the two springs 3 in the grooves 20 of the panel 2, part of the shank 41 of the screw 4 protrudes from the springs 3, through the hole created by the two cut-outs 34 of the springs. This protruding part of the shank 41 of the screw is used to fix to the springs 3 an anchoring arm 5 adapted to be anchored in special seats of profiles made integral to the wall to be clad, as will be described hereunder, with reference to Figures 4 and 5.

Returning to Figure 1, the anchoring arm 5 consists of a metal profile, substantially U-shaped in section so as to define a seat 50 (Figure 2) of such a width as to accommodate within it the two opposed springs 3.

A slot 51 which extends longitudinally in order to allow a portion of the shank 41 of the anchoring screw 4 to protrude is formed on the top wall of the anchoring arm 5. A nut 43 with an interposed washer 42 is screwed onto the portion of shank 41 of the screw which protrudes from the anchoring arm 5.

As the nut 43 is screwed, the anchoring arm 5 is pressed onto the springs 3, locking them in position and thus preventing them from disengaging from the grooves 20 of the panel 2.

The side walls of the anchoring arm 5 have a step 52 which defines an anchoring end portion 53 of reduced size. In this manner, as shown in Figure 3, when the anchoring arm 5 is fixed to the panel 2, a space 55 is defined between the rear surface of the panel 2 and the anchoring portion 53 of the anchoring arm.

A second slot 54 which serves to receive possible means for fixing to a profile integral with the wall to be clad is formed in the top wall of the anchoring arm 5, near the step 52 in the side walls.

Even if specific reference has been made in the drawings and in the detailed description to two opposed springs 3, it is obvious that the invention also extends to a single spring made in a single body with two anchoring portions 32 which engage in two respective grooves 20 of the panel, or with a single anchoring portion 32 which engages in a respective groove 20 of the panel.

A ventilated façade obtained with an anchoring system 1 according to the invention is described with reference to Figures 4 and 5.

Two L-shaped brackets 7 are fixed by means of plugs 70 engaged by screws 71 to a vertical wall 6 to be clad. Upright profiles 8 with a T-shaped cross section disposed vertically spaced from one another are fixed to the brackets 7 by means of screws 80. Stringer profiles 9 with a square cross section, disposed horizontally spaced from each other, are fixed to the upright profiles 8 by means of leaf springs 81 and hooks 82.

As shown in Figure 4, the stringer profiles 9 have two U-shaped seats 90 and 91 on opposite sides. Two anchoring arms 5 are anchored on the panel 2 by means of the anchoring system 1, so that the anchoring portions 53 of the two arms 5 are disposed towards the opposite sides of the panel 2.

The anchoring portion 53 of the first anchoring arm is then inserted into the first seat 90 of the first stringer profile 9. The anchoring portion 53 of the second anchoring arm, on the other hand, is inserted into the seat 91 of a second stringer profile 9' disposed beneath the first stringer profile 9.

The grip of the anchoring portion 53 of the anchoring arm inside the seat 91 of the second stringer profile 9' is ensured by a spring 95 constrained to the second stinger profile 9'. The spring 95 engages in the space 55 formed between the anchoring portion 53 of the arm and the rear surface of the panel 2.

Numerous changes and modifications of detail within the reach of a person skilled in the art can be made to the present embodiment of the invention without thereby departing from the scope of the invention, as set forth in the appended claims.

## Claims

1. An anchoring system (1) for panels (2) for cladding of walls (6) and particularly for ventilated facades, comprising an anchoring arm (5) adapted to be anchored in special seats (90, 91) formed in profiles (9) made integral with the wall (6) to be clad, **characterized in that** it further comprises:
- at least one leaf spring (3) adapted to engage in a respective groove (20) formed in the rear surface of the panel (2), and
- anchoring means (4) adapted to constrain said at least one leaf spring to said anchoring arm (5).

2. An anchoring system (1) according to claim 1, **characterized in that** said groove (20) in the panel is rectilinear in the longitudinal direction and has an oblique profile in cross section.

3. An anchoring system (1) according to claim 2, **characterized in that** said groove (20) is inclined in cross section with respect to the surface of the panel 8 by an angle (θ) of between 40° e 70°, preferably 55°.

4. An anchoring system (1) according to any one of the previous claims, **characterized in that** said groove (20) is obtained by milling.

5. An anchoring system (1) according to any one of the previous claims, **characterized in that** said groove (20) extends obliquely for a depth equal to about 9/10 of the thickness (S) of the panel.

6. An anchoring system (1) according to any one of the previous claims, **characterized in that** said panel (2) has a thickness (S) between 8 and 15 mm, preferably 10 mm.

7. An anchoring system (1) according to any one of the previous claims, **characterized in that** said anchoring means (4) comprise screw means (4) provided with a shank (41) that passes through a hole or cut-out (34) of said at least one spring (3) and a hole or slot (51) of said anchoring arm (5) to screw into a nut (43).

8. An anchoring system (1) according to any one of the preceding claims, **characterized in that** it comprises two opposed leaf springs (3), each spring (3) being provided with an anchoring portion (31) in the form of a rectangular plate adapted to engage in the corresponding groove (20).

9. An anchoring system (1) according to claims 7 and 8, **characterized in that** each leaf spring (3) comprises a portion (30), substantially U-shaped in cross section, said anchoring portion (31) protruding obliquely from one side of said U-shaped portion and said cut-out (34) being formed in the other side of said U for passage of the shank of the screw means.

10. An anchoring system (1) according to any one of the previous claims, **characterized in that** said anchoring arm (5) is in the form of a profile with a substantially U-shaped cross section and has an end part (52) with side portions of reduced size for engagement in said seats (90, 91) of the profiles (9) made integral with the wall (6) to be clad.

11. An anchoring system (1) according to any one of the preceding claims, **characterized in that** said panels (2) comprise slabs of ceramic, semi-precious stone, marble, granite and the like.
